# EUROPEAN PATENT APPLICATION

(11) **EP 1 296 218 A2**
(43) Date of publication of application: **26.03.2003**
(21) Application number: 02021270.0
(22) Date of filing: 19.09.2002
(51) Int. Cl.: G06F 3/12

(54) **Data driven constraint validation model for printer driver**

(30) Priority: 25.09.2001 US 324714 P
(71) Applicant: Heidelberger Druckmaschinen Aktiengesellschaft, 69115 Heidelberg (DE)
(72) Inventor: Wu, Michael, Fairport, NY 14450 (US)
(74) Representative: Franzen, Peter

(57) **Abstract**

Constraints for an input/output device can be stored in one or more files on a computer. When a user selects an option for an input/output device, the input/output device's driver can use a validation method to check the validity of the user's choice against the constraints for the input/output device. The validation method can obtain the input/output device's current constraints from one or more files stored on the computer.

## Description

### FIELD OF THE INVENTION

The present invention relates to a method of constraint validation for a printer driver.

### BACKGROUND OF THE INVENTION

A computer can execute a series of instructions compiled together in an application program. In a typical configuration a computer contains one or more processors, which perform its computational operations and run its application programs. It also contains memory, which is used to store data and instructions used by the computer, such as application programs. Types of memory include read-only memory ("ROM"), read/write memory ("RAM") and hard disk storage.

A computer may also comprise a variety of input and output ("I/O") devices, which allow a user to interact with the computer. Input devices allow a user to input information into the computer. Common input devices include disk drives, cd-rom drives, mice, keyboards, scanners and modems. Output devices return the results of various programs to the user. These devices may include floppy drives, cd-r/w drives, monitors, modems and printers.

Computers are utilized in a variety of different capacities from personal to business. Instructions are compiled together to form executable programs ranging from games and educational programs to word processing and database applications. One or more programs may run simultaneously on a computer. These types of programs are commonly termed application programs. A computer can run various additional programs, such as an operating system ("OS"). The operating system, among other important functions, maintains disk space, allocates processor time between different programs and oversees the interaction of the various I/O devices with the application programs.

Application programs and the OS frequently interface with the I/O devices. An application program, for example, may receive user input from the keyboard and display the inputted text on the monitor. This interface presents a difficulty because the I/O instructions of the application programs and the OS are usually in a high-level, generic form, while each I/O device generally only understands its own set of low-level instruction codes. Commonly, this communication gap is bridged using a device driver.

A device driver allows an application program to communicate with an I/O device by translating the application program's high-level I/O instructions into the low-level instruction codes understood by the I/O device. Additionally the device driver permits communication from the I/O device to the application program by converting the I/O device's low-level instruction codes into the more generic, high-level language understood by the application program. Each I/O device may have its own device driver, or a device driver may be used for more than one I/O device.

Using device drivers to interface between the I/O devices and application programs can have several advantages. To provide some examples, first, device drivers can make writing programs substantially easier, because the programmer can write I/O functions in high-level code without understanding the complexities of the low-level I/O device instruction codes. Second, device drivers can reduce the time and skill required to write application programs, because the programmer does not have to code routines to handle every possible I/O device. Third, device drivers can make application programs smaller, because one general language can be used for input and output instead of needing separate code to support each possible I/O device. Fourth, device drivers can allow application programs to utilize I/O devices even if the I/O devices have not been specifically coded into the application programs. Fifth, device drivers can prevent having to constantly update the application programs to support new I/O devices. Sixth, device drivers can reduce the redundant coding of I/O device routines in multiple application programs, because the device drivers can provide a central source for code handling the interface between the I/O device and the application programs. Seventh, device drivers can reduce conflicts between separate application programs trying to independently access an I/O device. Other advantages also exist.

A printer is one type of I/O device that can utilize a device driver. A printer ordinarily prints text or graphics on a page. There are many different types of printers, such as: dot matrix, ink jet and laser. Printers come in different sizes from small units attached to personal computers to large units designed for high-speed, large-volume commercial applications. Printers offer a variety of different options including print quality, impact or non-impact printing, color or gray-scale printing, graphics or text printing, paper size, paper quality, and the availability of different fonts. Each printer has its own set of available options, and this set can differ from other printers. The options may be specific to a particular type of printer; for instance, laser and ink jet printers do not support impact printing, while dot matrix printers do not support non-impact printing. The options may also be specific to a particular printer, without regard to its type; for example, one ink jet printer may support 8 ½" x 11" paper, another ink jet printer may only support 11" x 14" paper and a third ink jet printer may support both types.

Printers may also contain a number of finishing devices. The finishing devices may be integrated into the printer, or they may operate as separate devices. Examples of finishing devices include stapling machines, folding machines and collators. Finishing devices, like printers, have their own set of supported features.

Printers interface with the computer through the use of a printer driver, a specific type of device driver. Each printer has its own special set of instruction codes that are required to access its special features and abilities, and the printer driver converts between the low-level instruction codes understood by the printer and the high-level language understood by the OS and the application programs. The printer driver allows an application program to utilize the features of the printer without knowing the specifics of the printer's instruction codes.

At times a user may attempt to utilize features that a printer does not support. For example, a user may select a paper size that doesn't fit in the printer or a font that is not supported by the printer. If this impermissible feature selection were sent to the printer, an error would occur. Typically the printer would misinterpret the request and print a jumble of incoherent characters, reject the print job, or produce an error message that would require user intervention. The exact response can depend on a number of factors including: the code sent to the printer, the particular printer, the OS, the application program and the printer driver. It may also depend on other factors.

In order to prevent jobs from being submitted to the printer that would cause errors and require user intervention, the printer driver can use coded constraints. Different constraints are used to check for media and finishing device mismatches, to prevent a user from selecting a print media that is too large for a finishing device, or to prevent a user from selecting a printing mode that is not available for the current media. A multitude of other constraints can also be used.

Once the constraints for a particular printer are determined, the printer driver developer codes those constraints into the printer driver. Then the printer driver is compiled into an executable program and loaded onto the computer. When the printer driver runs on the computer, it allows the user to only select one of the available options based on the constraints. Thus, it can prevent errors, such as ones that would cause the printer to mismatch a print job or would require user intervention.

There are, however, disadvantages to using a device driver to interface between application programs and an I/O device. Ordinarily an I/O device has its own specific set of instruction codes, so a separate device driver is generally required to be coded for each I/O device. Using device drivers also requires that the device drivers be running on the computer as additional programs. As the number of programs running on a computer increases, the speed and efficiency with which all programs run decrease, and it becomes a more complex task for the OS to oversee all the programs.

Another disadvantage of device drivers is that when different features are added to an I/O device, additional instruction codes are required to access those features. The device driver must then be updated to add the new instruction codes. Also, if a different I/O device is added or an existing I/O device is replaced, a new set of instruction codes may apply, and the device driver may have to be updated. Modifying a device driver is a complex task that requires rewriting the device driver code to reflect the changes, compiling the new device driver code into a new executable program and loading the new executable program onto the computer.

For example, when a new finishing device is attached to the printer or when other changes are made, the driver developer must re-code the printer driver's constraints to match the new requirements, recompile the printer driver into a new executable program and load the new executable program onto the computer. This is a substantial undertaking when a change is made, because the average user does not have the special skills or knowledge to rewrite the code for the printer driver, create the new executable program and load it onto the computer.

Therefore, there exists a need for a simpler and more efficient way of checking a user's selections against the constraint requirements of the printer when changes are made to the printer or finishing devices.

### SUMMARY OF THE INVENTION

A printer driver can use coded constraints to prevent print jobs from being submitted to a printer that would cause errors on the printer and that may require operator intervention to complete. The constraints can be used to check the available features of a printer or finishing device against a user's selections, thereby preventing errors.

A data model can solve the constraint validation in the printer driver before printing occurs. The constraints can be stored in a file, which may be separate from the device driver. The user can select a new printer option by choosing a different control, and this may be done through a user interface. Before changing its value, the device driver can perform a check to see if the new value would raise a constraint. A validation method can be used to determine if the new control would raise a constraint. Based on the result of the method, the control may be updated and the new option may be implemented. The validation method can be part of the printer driver, such as by integrating it into the printer driver's code, or it may be separate from the printer driver. When the validation method runs, it can obtain the current constraint information from the constraint file.

The data-driven method can eliminate the need for re-coding the device driver each time the constraints change. When the constraints are changed, they can be updated in the constraint file, thereby eliminating the need to reprogram and recompile the device driver.

These as well as other aspects and advantages of the present invention will become apparent to from reading the following detailed description, with appropriate reference to the accompanying drawings.

### BRIEF DESCRIPTION OF THE DRAWINGS

An exemplary embodiment of the present invention are described herein with reference to the drawings, in which:
- Figure 1: is a drawing of a computer system that can be used to implement the present invention;
- Figure 2: illustrates an operating system interacting with application programs in the computer system depicted in Figure 1;
- Figure 3: illustrates application programs and an operating system interacting with I/O devices using device drivers;
- Figure 4: illustrates an alternate embodiment of application programs and an operating system interacting with I/O devices using device drivers;
- Figure 5: is a depiction of the hierarchical structure of a printer driver control; and
- Figure 6: is a flow chart for changing controls based on a user's selection.

### DETAILED DESCRIPTION OF EXEMPLARY EMBODIMENTS

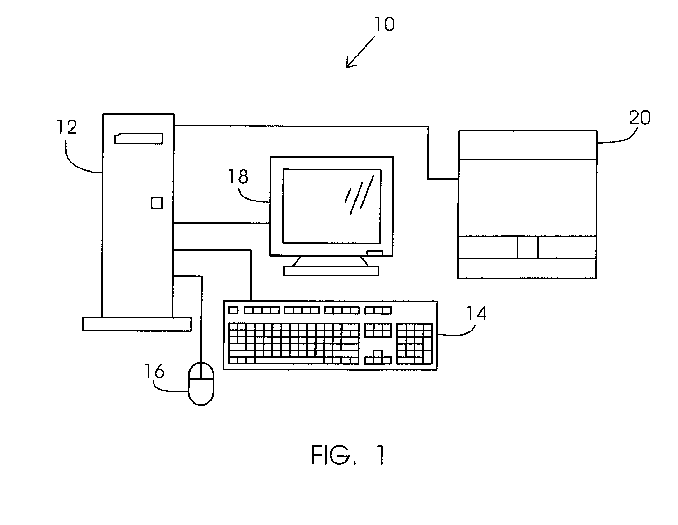

Figure 1 generally depicts a computer system 10. It shows a computer 12 attached to two input devices -- a keyboard 14 and a mouse 16. The input devices accept data from a user and transfer the data into the computer 12 for processing. Figure 1 also depicts two output devices -- a monitor 18 and a printer 20. The output devices obtain data from the computer 12 and display it in a manner accessible to the user. While the computer 12 is pictured with four particular I/O devices 14, 16, 18, 20, it is possible to add additional devices or to omit some of the depicted devices. The printer 20 may also contain finishing devices (not shown). The finishing devices can be designed to perform a number of different tasks. They may, for example, fold the outputted paper, collate the outputted paper, staple the printed sheets or bind the printed sheets together. These devices may be separately attached to the computer 12 or printer 20, or they may be integrated into the printer 20.

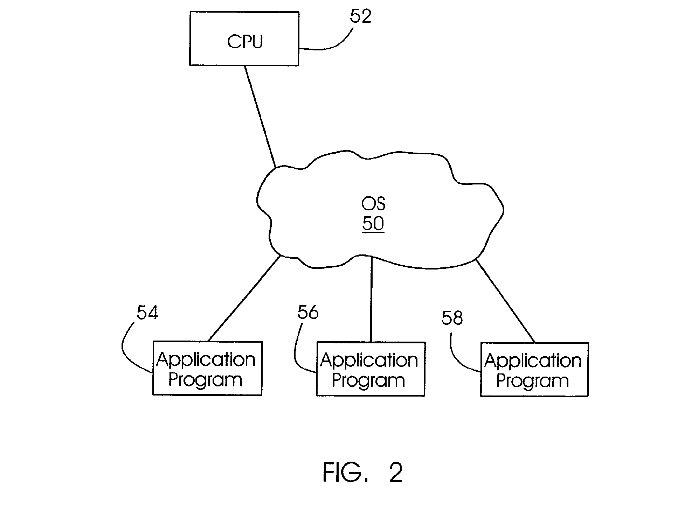

Figure 2 shows one illustration of an operating system ("OS") 50, which can run on a central processing unit ("CPU") 52 within the computer 12. Application programs 54, 56, 58 may also reside on the computer 12 and run on the CPU 52. While Figure 2 illustrates three application programs, other embodiments may include a greater or fewer number of application programs 54, 56, 58. The OS 50 regulates the interaction of the application programs 54, 56, 58 with each other and with the CPU 52. The OS 50 also controls the assignment of disk space, allocates the processor time between application programs 54, 56, 58, regulates the interaction of the application programs 54, 56, 58 with the I/O devices 14, 16, 18, 20. It can also perform many other functions.

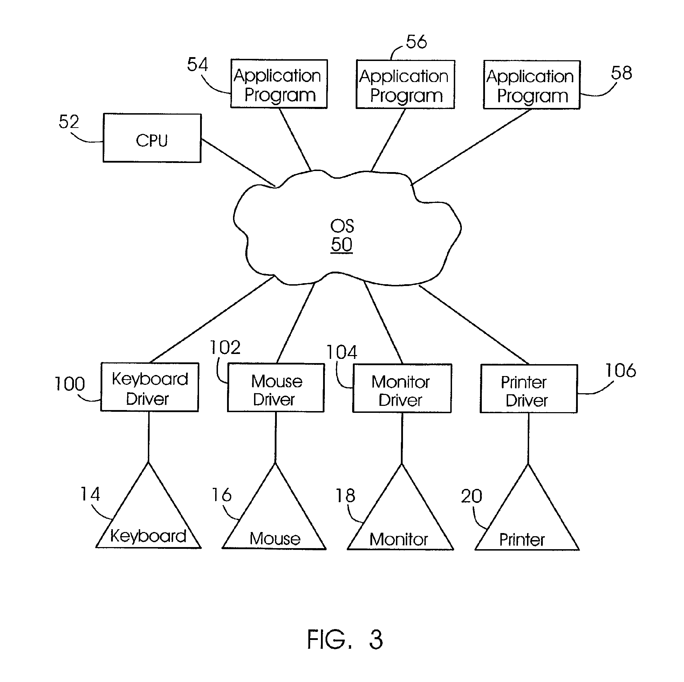

Figure 3 also shows the OS 50 connected to the CPU 52 and to the application programs 54, 56, 58. This figure illustrates four I/O devices ― a keyboard 14, a mouse 16, a monitor 18 and a printer 20. Each I/O device 14, 16, 18, 20 has associated with it a device driver 100, 102, 104, 106. The device drivers 100, 102, 104, 106 translate between the high-level language used by the OS 50 and the application programs 54, 56, 58, and the low-level instructions understood by the I/O devices 14, 16, 18, 20. In this configuration, each I/O device has its own device driver. The keyboard 14 uses a keyboard driver 100. The mouse 16 uses a mouse driver 102. The monitor 18 uses a monitor driver 104, and the printer 20 uses a printer driver 106. Each device driver 100, 102, 104, 106 can be a separate program running on the computer 12 using its CPU 52.

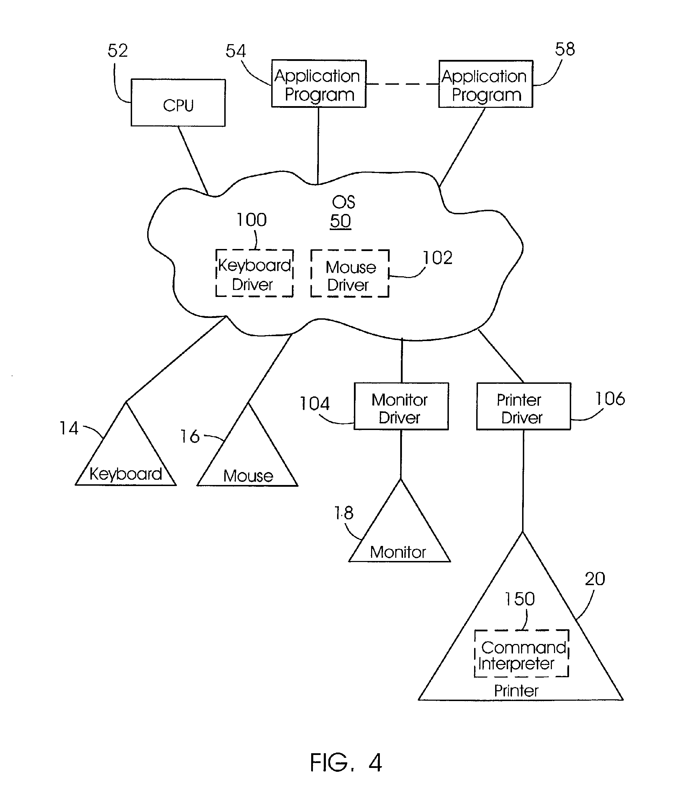

Figure 4 shows an alternative implementation of a computer system 10. In this implementation the CPU 52 and an array of application programs 54, 58 are shown interacting with the OS 50. The dashed line between the two application programs indicates more than two application programs may be running on the computer 12. A keyboard 14, mouse 16, monitor 18 and printer 20 are attached to the computer 12, and they may be used by the application programs. The arrangement of the device drivers 100, 102, 104, 106, however, is different than the arrangement in Figure 3. Since a device driver is an executable computer program, it can reside in several different locations within the computer system 10. The device drivers for the keyboard 14 and the mouse 16 are shown as integrated parts of the OS 50. For example, they may be included in the code for the OS 50 instead of running as separate programs. In contrast, the monitor's device driver 104 runs as a separate program on the computer 12 using its CPU 52.

The printer driver 106, which may be supplied by the printer manufacturer, can run as part of the OS 50, or it may run as a separate program. Figure 3 depicts the printer driver 106 as a separate program from the OS. The printer driver 106 maps the OS 50 drawing calls such as draw line, draw text, and draw cycles used by the application programs into commands that are sent to the printer 20. A command interpreter 150 resides in the printer 20, and it can translate the commands received from the OS into the low-level printer language.

Often I/O devices will contain their own processor ― typically much less powerful than the computer's CPU 52 ― and can execute small programs and perform various processing functions. In this implementation the high-level language calls used by the application programs are sent directly to the printer 20 where the command interpreter 150 converts them into the low-level printer language. This is in contrast to the keyboard 14, mouse 16 and monitor configurations where the device driver converts the high-level language into the low-level device language before sending the instructions to the I/O device.

Figure 3 and Figure 4 represent only two possible configurations of the computer system and the location of the device drivers. Various different configurations are also possible, and these may also be used.

In addition to converting between high-level and low-level instructions, the printer driver 106 can supervise the options selected by the user. The printer driver 106 can prevent the user from selecting options that are not supported by the printer 20 or its finishing devices. This regulation can prevent an error from occurring that would require user intervention to correct. If this type of error were to occur, the printer 20 may temporarily stop processing print jobs. By eliminating the need for constant user supervision and temporary stoppages in printing, the regulation can allow for the timely execution of pending print jobs.

The printer driver 106 uses coded constraints to prevent print jobs from being submitted to the printer 20 that would cause these errors and require user intervention. A printer 20 may have many constraints, and each constraint will serve a separate function. For example, the constraints are used to check for media and finishing device mismatches, thereby preventing a user from selecting a print media that is too large for a finishing device or from selecting a printing mode that is not available for the current media. When a new finishing device is attached to the printer 20, a new media size is added or another change is made, the constraints will change according to the new limitations.

In an exemplary embodiment, a user who sends a job to the printer 20 for processing selects from among the available options. Each option can correspond to one or more control values maintained by the printer driver 106. There are a finite number of controls on the user interface in the printer driver 106, because there are a finite number of user-selectable options. When a user selects an available option a new control value corresponding to that option must be set. A user can select an option and change the control through a check box, a popup menu item, a list item or another form of input. Each control has a value. The value can be on or off, one or more numbers, true or false, or another type of representation. For a control to change its value without interface with another control's value, the printer driver 106 checks to see if the new change would raise a constraint. The printer driver 106 can use a validation method to perform the check. If no constraints are raised, then the new control value is set and the new option is selected.

The validation method can use a data model to solve the constraint validation in the printer driver 106. A file containing the constraints is stored on the computer 12 and is separate from the printer driver 106. When a user makes a selection, the printer driver 106 uses the validation method and the current constraint file to check if the new control value is valid. If the value is valid, the control is updated; otherwise, the user's choice is rejected.

The printer driver 106 is a software program written by a developer, compiled into an executable program and loaded onto the computer 12. When a change is made that requires updating the constraints of the printer 20 and finishing devices, a new file containing the constraints is loaded onto the computer 12, or the existing file can be modified. The use of the separate constraint file eliminates the need to reprogram, recompile and reload the printer driver 106 each time the constraints change, and modifying the constraint file can be significantly easier than changing the printer driver.

### EXEMPLARY VALIDATION METHOD IMPLEMENTATION

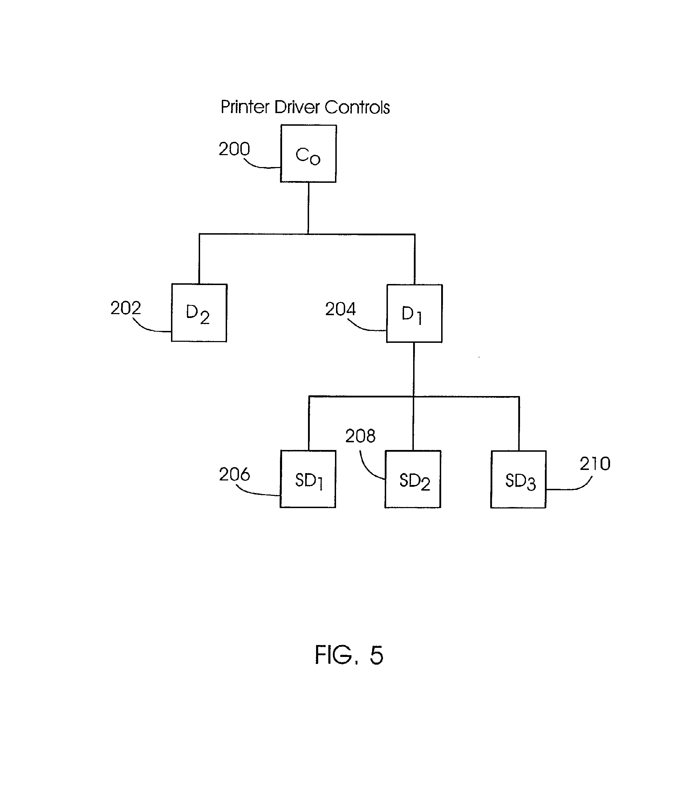

For all of the controls on the user interface, each control has a value and may include zero or more dependent controls. Each dependent control has a pair of values (lower and upper bounds) and may also have zero or more sub-dependent controls. Figure 5 shows an illustration of a hierarchical control structure. It depicts one control, C₀ 200, and its dependent and sub-dependent controls. There are two dependent controls, D₁ 202 and D₂ 204, and three sub-dependent controls SD₁ 206, SD₂ 208 and SD₃ 210. These three controls 206, 208, 210 are dependent on D₁ 204. D₂ 202 has no dependent controls, which would be sub-dependent on C₀ 200.

Each dependent control includes a validation type, a validation condition and a validation result code. When the value of a control changes, all dependents and sub-dependents must be checked to see if the validation type is met with the validation condition for the new value. This is done by parsing the constraint tree and checking the appropriate values. A parsing method to perform this function may be implemented in many different forms. The following rules define the general process sequence:

### To stop the parse of a branch:

1. The control has no dependents; or
2. The dependent's value is out of the bound range; or
3. There are no more sub-dependents; or
4. The sub-dependent is 0.

### To process the parsed information:

1. If a control has no dependents, there is no need for validation. The return result is successful.
2. When the visit stops, if the validation type only requires one pair of values, such as paper-side, take the last value on the sub-dependent against the condition.
3. If the validation type requires two pairs of values, the method will depend on the validation type to determine how to proceed. It may take the last two values from the last two sub-dependents, or it may take the value from the current control and the last value of the sub-dependent.
4. If the condition is met, the constraint is raised. The return result is failed.

### Symbol definitions:

:: "Defined as"
| "Logical OR"
{}_{n,m} "Repeat n times up to m times"

### Constraint for each control Cₓ:

C_{X}, V, N, D, List
V :: current control value of Cₓ
N :: number of control values for the control Cₓ
D :: number of dependents
List:: {{Cₖ, (L-H}}_{0,N} Type, Condition, Result}_{opt.} |0,0-0

Where:

| | |
|---|---|
| 0 <= V | k! = x |
| 0 <= N | n! = x |
| 0 <= D | 0 <= L <= H\|L > H |
| 0<=k<=n | H <= 0\|H <= Cₖ's N |
| Type = predefined validation type that can be implemented | |
| Condition :: = \| != \| = \|<\|>\|<=\|>= | |

### Parsing Example

Table 1 shows controls C₁ (body paper selection) and C₂ (printing mode). It depicts one exemplary embodiment for storing the constraint values; however, the data can be stored and retrieved in numerous other ways.

**TABLE 1**

| | | Value | Sub- | Sub- | Sub- | Validation | Condition | Result |
|---|---|---|---|---|---|---|---|---|
| | | | Dependent1 | Dependent2 | Dependent3 | Type | | |
| Body Paper Popup | 1 | | | | | | | |
| Number of values | 1 | | | | | | | |
| Number of Dependents | 6 | | | | | | | |
| | | Paper | | | | | | |
| | | Entry | 2,2-3 | 1,1-(-2) | 0,0-0 | 1-Side(1) | = | 16004 |
| | | | 2,4-5 | 10,2-2 | 5,1-(-2) | Size(18) | <> | 16000 |
| | | | 2,6-6 | 1,1-(-2) | 0,0-0 | Size(16) | <> | 16009 |
| | | | 2,6-6 | 1,1-(-2) | 0,0-0 | 1-Side(1) | = | 16004 |
| | | | 2,6-6 | 6,2-5 | 7,1-(-2) | Size(12) | <> | 16017 |
| | | | 2,6-6 | 8,2-5 | 9,1-(-2) | Size(12) | <> | 16017 |
| Printing Mode Popup | 1 | | | | | | | |
| Number of Values | 6 | | | | | | | |
| Number of Dependents | 11 | | | | | | | |
| 1-Sided | | 1 | 0,0-0 | 0,0-0 | 0,0-0 | | | |
| 2-Sided-Short Edge | | 2 | 1,1-(-2) | 0,0-0 | 0,0-0 | 1-Side(1) | = | 16004 |
| | | | 2,6-6 | 1,1-(-2) | 0,0-0 | Type(16) | <> | 16009 |
| | | | 2,6-6 | 1,1-(-2) | 0,0-0 | Side(1) | = | 16004 |
| 2-Sided-Long-Edge | | 3 | 1,1-(-2) | 0,0-0 | 0,0-0 | 1-Side(1) | = | 16004 |
| | | | 2,6-6 | 8,2-5 | 9,1-(-2) | Size(12) | <> | 16017 |
| | | | 10,2-2 | 1,1-(-2) | 0,0-0 | Size(7) | = | 16011 |
| Interleave-Blank | | 4 | 0,0-0 | 0,0-0 | 0,0-0 | N/a | N/a | 0 |
| Interleave-Preprinted | | 5 | 0,0-0 | 0,0-0 | 0,0-0 | N/a | N/a | 0 |
| Pamphlet | | 6 | 6,2-4 | 8,1-(-2) | 0,0-0 | Value(15 | = | 16049 |
| | | | 6,2-5 | 8,5-5 | 0,0-0 | Value(15) | = | 16049 |

As an example, a user may change the body paper selection, thereby, potentially changing the control value corresponding to the body paper selection. In order to validate the new control value against the constraints for the printer, the validation process visits the dependents of the body paper selection control. In this case, the body paper selection control is C₁, and the validation method visits Cl's six dependents.

### Constraint 1:

If the printing mode is two sided, and the selected body paper is force 1-sided paper, the constraint raises.

If the control C₂ (printing mode) has a value in the range of 2 and 3 (2-Sided Short Edge or 2-Sided Long Edge), take the value of C₁ (Body Paper Selection) against the type of 1-Sided for condition of equal. If value of C₁ equals to 1-Sided, the result code 16004 is returned.

If the control C₂ (printing mode) does not have a value in the range of 2 and 3, the validation skips this control.

### Constraint 2:

If the printing mode interleaves, and the finishing device is stapler, the body paper size must equal the interleave paper size.

If the control C₂ (printing mode) has the value range of 4 and 5 (Interleave-Blank or Interleave-Printed), take the value of control C₁₀ (Finishing Device) to see if the value of C₁₀ is in the range of 2 and 2 (stapler). If the value of C₁₀ is in the range, take the value of control C₅ (Interleave paper). Since there is no more sub-dependent after C₅, it stops. The validation type is Size(18), so it takes the value of C₅ and the value of C₁ to check the condition of equal. If these two values are not equal, the result code 16000 is returned.

If the control C₂ (printing mode) does not have the value in the range of 4 and 5, the validation skips this control.

### Constraint 3:

If the printing mode is pamphlet, the body size must be in one of the pamphlet sizes that are supported by the printer.

If the control C₂ (printing mode) has the value range 6 and 6 (Pamphlet Mode), take the value of C₁ (Body paper). Since next sub-dependent is 0, the validation stops. The validation type is Size(16). It takes the value of C₁ to see if the size is in one of the predefined pamphlet sizes. If the condition is not equal, the result code 16009 is returned.

### Constraint 4:

If the printing mode is pamphlet, the body paper side must not be 1-sided. The validation process is the same as Constraint 3.

### Constraint 5:

If the printing mode is pamphlet, the front cover paper size must equal the body paper size. The validation process is the same as Constraint 3.

### Constraint 6:

If the printing mode is pamphlet, the back cover paper size must equal the body paper size. The validation process is the same as Constraint 3.

The validation process is successful when all of the above validations return a 0 result code. If the validation is successful, the control value is changed and the new body paper selection can be used. If the validation is not successful, the control value is not changed and the new body paper selection is not used. An error message may also be returned to the user to indication that the new body paper selection failed.

A greater number of dependent and sub-dependent controls on the list can require a more complicated implementation of the printer driver 106. If the constraint data file is removed, the printer driver 106 has no constraints and any selection may be permissible. A full implementation of the validation method may eliminate re-coding the printer driver 106 when constraints are added or removed, thereby achieving the desired data driven mode. It is possible, however, that some constraints are coded in the constraint file, while other constraints are coded into the device driver. In yet another embodiment, more than one file may be used to store the different constraints.

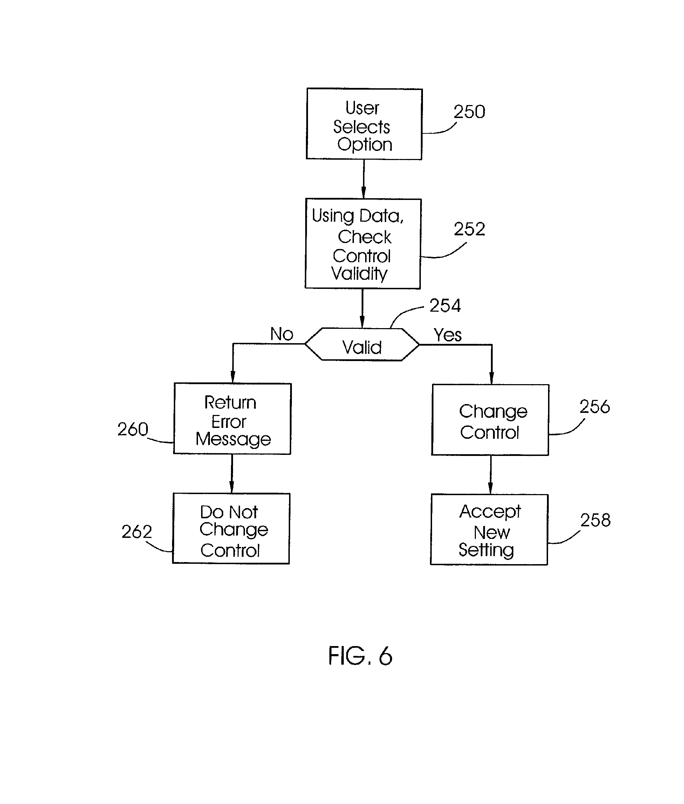

Figure 6 illustrates a flow chart of the process to update a control. At Step 250, a user selects a new option, which may correspond to one or more controls. For example, the user may make a selection through a user interface for the device. Then, at Step 252, the printer driver 106 uses data to check the control validity. This may be done, for example, by using the exemplary validation method previously described to access one or more constraint files. At Step 254, the printer driver makes a determination as to the validity of the control corresponding to the newly selected option. If the control is valid, then at Step 256 the printer driver 106 changes the control. Finally, at Step 258, the new control setting is accepted. Alternatively, at Step 254, the printer driver 106 may determine that the new control isn't valid. Then, at Step 260, the printer driver 106 may cause an error message to be returned to the user. At Step 262, the control is not updated, and the new option is not implemented.

The terminology herein describes a typical computer system; however, the principles of an operating system interacting with I/O devices through device drivers extend to a variety of other contexts. Examples of systems that use those principles are personal digital assistants, pagers, copy machines, printing presses, automobiles, cellular telephones and myriad of common electronic devices. And, the principles of this invention may be extended to these, or other, environments.

It should be understood that the programs, processes, methods and apparatus described herein are not related or limited to any particular type of computer or network apparatus (hardware or software), unless indicated otherwise. Various types of general purpose or specialized computer apparatus may be used with or perform operations in accordance with the teachings described herein. While various elements of the preferred embodiments have been described as being implemented in software, in other embodiments in hardware or firmware implementations may alternatively be used, and vice-versa.

In view of the wide variety of embodiments to which the principles of the present invention can be applied, it should be understood that the illustrated embodiments are exemplary only, and should not be taken as limiting the scope of the present invention. For example, the steps of the flow diagrams may be taken in sequences other than those described, and more, fewer or other elements may be used in the block diagrams.

The claims should not be read as limited to the described order or elements unless stated to that effect. Therefore, all embodiments that come within the scope and spirit of the following claims and equivalents thereto are claimed as the invention.

### Reference List

- 10: computer system
- 12: computer
- 14: keyboard
- 16: mouse
- 18: monitor
- 20: printer

- 50: operating system
- 52: CPU
- 54: application program
- 56: application program
- 58: application program

- 100: keyboard driver
- 102: mouse driver
- 104: monitor driver
- 106: printer driver

- 150: command interpreter

- 200 = C₀: control
- 202 = D₁: dependent control
- 204 = D₂: dependent control
- 206 = SD₁: sub-dependent control
- 208 = SD₂: sub-dependent control
- 210 = SD₃: sub-dependent control
- 250-262: steps

## Claims

1. A method for constraint validation in a computer system, having at least one computer and one additional device, said computer and said device communicating with each other, the method comprising:
receiving a request to update an option for a device from a first option to a second option, wherein the first option corresponds to a first control value stored in the computer system, and wherein the second option corresponds to a second control value stored in the computer system;
accessing a constraint file, wherein the constraint file stores a list of permissible control values; and
determining if the second control value is in the list of permissible control values.

2. The method of claim 1, further comprising:
determining that the second control value is in the list of permissible control values; and
updating the option from the first option to the second option.

3. The method of claim 2, wherein a control value for the option is stored in a configuration file, and wherein updating the option from the first option to the second option comprises:
updating the control value in the configuration file from the first control value to the second control value.

4. The method of claim 1, further comprising:
determining that the second control value is not in the list of permissible control values; and
returning an error message indicating that the option was not updated to the second option.

5. The method of claim 1, wherein the device is a printer.

6. The method of claim 5, wherein the option is a paper body size.

7. The method of claim 5, wherein the option is a printing mode.

8. The method of claim 1, wherein the device is a finishing device.

9. A method for a printer driver to validate printer option selections in a printing system, the method comprising:
receiving a request to change a control from a first control value to a second control value, wherein the first control value corresponds to a first option for a printer, and
wherein the second control value corresponds to a second option for the printer; accessing at least one constraint file, wherein the at least one constraint file stores a list of allowable values for the second control value; and
determining if the second control value is in the list of allowable values.

10. The method of claim 9, further comprising:
determining that the second control value is in the list of allowable values;
accessing a configuration file, wherein the configuration file stores values for a plurality of controls for the printer, and wherein the control is one of the plurality of controls; and
updating the control in the configuration file from the first control value to the second control value.

11. The method of claim 9, wherein the control includes at least one dependent control, the method further comprising:
validating the at least one dependent control against the second control value.

12. The method of claim 11, further comprising:
determining that the at least one dependent control is not valid with the second control value; and
returning an error message indicating that the control was not changed.

13. The method of claim 11, wherein the control and the at least one dependent control are represented by a hierarchical control structure, and wherein validating the at least one dependent control further comprises:
using a validation method to parse the hierarchical control structure.

14. The method of claim 11, wherein the at least one dependent control includes a plurality of dependent controls.

15. The method of claim 9, wherein receiving a request includes:
displaying a graphical user interface, wherein the graphical user interface includes at least one feature, and wherein the at least one features displays a plurality of printer option selections; and
receiving an indication of one of the plurality of printer option selections displayed by the at least one feature.

16. The method of claim 9, wherein the feature is one of a check box, a pop-up menu item or a list item.

17. The method of claim 9, wherein the at least one constraint file is a plurality of constraint files.

18. The method of claim 9, wherein the option is a paper size.

19. The method of claim 9, wherein the option is a finishing device option.
